# EUROPÄISCHE PATENTSCHRIFT

(11) **EP 0 766 810 B1**
(45) Veröffentlichungstag und Bekanntmachung des Hinweises auf die Patenterteilung: **23.02.2000**
(21) Anmeldenummer: 95919440.8
(22) Anmeldetag: 11.05.1995
(51) Int. Cl.: G01C 15/02

(54) **OPTISCHE EINRICHTUNG ZUM BESTIMMEN DER LAGE EINER REFLEKTIERENDEN ZIELMARKE**
OPTICAL DEVICE FOR DETERMINING THE POSITION OF A REFLECTIVE GRATICULE
SYSTEME OPTIQUE POUR DETERMINER LA POSITION D'UN REPERE DE VISEE REFLECHISSANT

(30) Priorität: 22.06.1994 DE 4421783
(43) Veröffentlichungstag der Anmeldung: 09.04.1997
(73) Patentinhaber: Leica Geosystems AG, 9435 Heerbrugg (CH)
(72) Erfinder: EHBETS, Hartmut, CH-9432 Platz (CH)
(74) Vertreter: Stamer, Harald, Dipl,-Phys.
(86) Internationale Anmeldenummer: EP9501781
(87) Internationale Veröffentlichungsnummer: WO9535480

(56) Entgegenhaltungen:
- DE-A- 4 013 576
- US-A- 3 188 739
- US-A- 4 964 218

## Beschreibung

Die Erfindung betrifft eine optische Einrichtung zum Bestimmen der Lage einer reflektierenden Zielmarke, mit einem Scheinwerfer zur Beleuchtung der Zielmarke, einem Abbildungssystem zum Abbilden der Zielmarke auf eine ortsauflösende Detektoreinrichtung und einer Auswerteeinrichtung zur Bestimmung der Ortskoordinaten des Zielmarkenbildes.

Aus der US-PS 3 188 739 ist als Zielmarke eine transparente Kugel mit einem markierten Zentrum bekannt. Die Markierung erfolgt durch eine Bohrung entlang einer Radiuslinie der Kugel bis in den Kugelmittelpunkt. Zusätzlich kann durch eine Beleuchtung des Bohrlochs die Markierung des Kugelmittelpunkts verstärkt werden. Eine andere Markierungsmöglichkeit ergibt sich aus der Verwendung lumineszierender Materialien, die im Kugelmittelpunkt eingeschmolzen sind. Mit derartig markierten Kugeln ist eine Distanzbestimmung zwischen zwei Punkten im Raum in bekannter Weise durch Triangulation mit Hilfe von Theodoliten möglich.

In der DE 40 13 576 Al ist eine Milchglaskugel offenbart, die als Zielmarke zur Bestimmung von Meßpunkten mit optischen Zielgeräten dient. Durch das lichtdurchlässige, lichtstreuende Material der Kugel wird eine homogene Helligkeit der Kugeloberfläche erreicht, die eine Anzielung aus einem großen Winkelbereich ermöglicht.

In der US-PS 5 207 003 wird ein Target mit mindestens vier herkömmlichen Retroreflektoren und einem sphärischen Reflektor beschrieben, mit denen die dreidimensionale Position und die Winkellage des Targets gemessen wird. Dazu wird das Target über einen halbdurchlässigen, streuenden Spiegel von einer Lichtquelle beleuchtet. Das von dem sphärischen Reflektor und den vier Retroreflektoren reflektierte Licht gelangt über eine Optik auf einen photografischen Detektor. Dabei werden das Krümmungszentrum des sphärischen Reflektors und die Retroreflektoren als Lichtflecke abgebildet. Aus den Koordinaten dieser Lichtflecke auf dem Detektor werden die dreidimensionale Position und die Winkellage des Targets und des mit ihm verbundenen Objekts rechnerisch ermittelt.

Weitere optische Vorrichtungen der genannten Art sind bekannt und ausführlich dargestellt in der Zeitschrift Technische Rundschau Nr. 39,1988, S.14-18 mit dem Titel 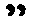 Theodolitsysteme für industrielle und geodätische Messungen" von W. Huep, O. Katowski und in der Zeitschrift Opticus Nr.1/94, S. 8-9 der Firma Leica AG in einem Aufsatz mit dem Titel 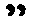 Theodolite - Sensoren für die industrielle Vermessung".

Die in diesen Veröffentlichungen beschriebenen Theodolitsysteme werden zur berührungslosen Vermessung von Oberflächen wie z.B. Verkleidungen von Flugzeugen oder Karosserieteilen eingesetzt. Die verwendeten Theodolitsysteme haben einen kompakten Aufbau mit einem Theodolitfernrohr als Abbildungssystem, einem koaxial dazu angeordneten Scheinwerfer zur Zielmarkenbeleuchtung, einer Videokamera mit einem CCD-Array und einer elektronischen Auswerteeinrichtung, die auch einen Bildverarbeitungsrechner und entsprechende Software enthalten kann. Außerdem kann das Theodolitsystem auch mit einer Entfernungsmeßeinrichtung ausgerüstet werden.

Die Theodolitsysteme sind mit elektronischen Kreisabgriffen und motorisierten Antrieben für die horizontalen und vertikalen Verstellungen des Fernrohrs ausgestattet, so daß ein automatischer, ferngesteuerter Meßablauf möglich ist. Die horizontalen und vertikalen Winkel geben die Richtungen zu den Zielmarken in einem vorgegebenen Koordinatensystem an.

Um eine objektive und präzise Richtungsmessung zu erreichen, wird die Videokamera unter Einbeziehung von Bildverarbeitungsalgorithmen eingesetzt. Das aufdem CCD-Array der Kamera erzeugte Zielmarkenbild wird mit Hilfe geeigneter Algorithmen ausgewertet und der Mittelpunkt des Zielmarkenbildes bestimmt. Die Koordinaten dieses Mittelpunkts aufdem CCD-Array werden dann mittels Software in Ablagewinkel umgewandelt, die zusammen mit den elektronischen Kreisablesungen die Richtung zur Zielmarke ergeben.

Mit den Richtungsmessungen wiederum werden bei zusätzlicher Information die dreidimensionalen Zielmarkenkoordinaten bestimmt. Bei der Polarmethode wird zusätzlich zur Winkelmessung eine Distanzmessung vorgenommen. Hingegen verwendet die Triangulationsmethode ein zweites Theodolitsystem bekannter Position und ermittelt über reine Winkelmessungen trigonometrisch die Positionen der Zielmarken.

Als Strahlungsquelle für den Scheinwerfer wird meistens eine im nahen Infraroten mit hoher Strahldichte strahlende Lumineszenzdiode (sogenannte High Radiance Diode) verwendet.

Als Zielmarken zur Vermessung des Objektes dienen oberflächenreflektierende Kugeln, z.B verchromte, polierte Stahlkugeln, die die geforderte Eigenschaft aufweisen, daß unabhängig von der Beobachtungsrichtung des jeweiligen Theodoliten das gleiche Zielmarkenbild dargeboten wird. An diesen oberflächenreflektierenden Kugeln befinden sich zentrierte Befestigungselemente, mit deren Hilfe diese Zielmarken an den dafür vorgesehenen Positionen auf der zu vermessenden Oberfläche reproduzierbar angebracht werden können. Es können auch stabförmige Halterungen verwendet werden, auf denen die Kugeln aufliegen.

Die verwendeten spiegelnden Kugeln, die üblicherweise einen Durchmesser von ca. 12mm haben, erzeugen ein scheinbar im Inneren der Kugel liegendes, virtuelles Bild der Scheinwerferpupille des Theodoliten etwa in der Brennebene der Kugeloberfläche, d.h. etwa im Abstand von einem Viertel des Kugeldurchmessers hinter dem Scheitelpunkt der Kugeloberfläche. Dieses Bild wird mit dem Fernrohr des Theodoliten beobachtet bzw. mit der Videokamera aufgenommen und auf dem CCD-Array dargestellt.

Wegen der kleinen Brennweite der oberflächenreflektierenden Kugeln von ca. 3mm bei Kugeldurchmessern von ca. 12mm ist das Pupillenbild in der Kugel bereits ab etwa 1,5m Distanz beugungsbegrenzt klein und damit kleiner als ein Empfangselement des CCD-Arrays. Damit trotzdem eine Auswertung erfolgen kann, muß das Theodolitfernrohr derart defokussiert werden, daß das Zielmarkenbild auf mehrere Pixel der Kamera verteilt ist. Der Mittelpunkt dieses so gewonnenen Lichtflecks kann durch Schwerpunktbestimmung oder Konturauswertung ermittelt werden. Allerdings bedingt die unterschiedliche Intensitätsverteilung der Strahlung im Lichtfleck und dessen unscharfer Rand eine nur eingeschränkt genaue Richtungsmessung zur Kugel. Ebenso führt eine geringe Verschmutzung der Kugel zu einer unterschiedlichen Intensitätsverteilung der Strahlung im Lichtfleck und dadurch zu Meßfehlern.

Ein weiteres Problem der Abbildung durch spiegelnde Kugeloberflächen ergibt sich daraus, daß die von diesen Kugeln in das Fernrohrobjektiv zurückgestrahlte Strahlungsleistung ab der Scheinwerfergrenzdistanz mit der 4. Potenz der Distanz abfällt. Dies hat zur Folge, daß dieses Meßverfahren nur bis zu Distanzen von ca. 10m anwendbar ist. Bei größeren Distanzen reicht das Empfangssignal für eine Richtungsmessung und damit letztlich für eine dreidimensionale Positionsbestimmung nicht mehr aus, auch nicht bei Verwendung von größeren Kugeln.

Ausgehend von diesem Stand der Technik liegt der Erfindung die Aufgabe zugrunde, eine optische Einrichtung und ein Verfahren zur Lagebestimmung des Zielmarkenbildes auf einem ortsempfindlichen Detektor anzugeben, bei denen diese Lagebestimmung und damit die Richtungsmessung zur Zielmarke über größere Distanzen hinweg möglich wird, mit höherer Präzision durchführbar ist, unempfindlich gegenüber Verschmutzungen und unempfindlich aufdurch Befestigungselemente eingeschränkte Abbildungsverhältnisse der Zielmarke ist.

Diese Aufgabe wird bei einer Einrichtung der eingangs genannten Art erfindungsgemäß dadurch gelöst, daß als Zielmarke eine für die Scheinwerferbeleuchtung transparente Kugel mit einem Brechungsindex n zwischen √2 und 2 vorgesehen ist und das Zielmarkenbild zumindest Teil einer Kreisringfläche ist, deren durch Bildauswertung bestimmter Mittelpunkt die Lage der Zielmarke angibt. Ein besonderes Verfahren besteht darin, daß das Abbildungssystem defokussiert wird und die dadurch auftretenden Mehrfachkreisringflächen von der Detektoreinrichtung aufgenommen und mit mathematischen Mitteln zur Bestimmung des Zielmarkenmittelpunkts ausgewertet werden.

Vorteilhafte Weiterbildungen und Verbesserungen der Erfindung ergeben sich aus den Merkmalen der Unteransprüche 2 bis 15.

Die Vorteile der Erfindung liegen zum einen in der drastischen Erhöhung der Strahlungsleistung am Ort der Detektoreinrichtung durch die Verwendung von kugelförmigen und für die Beleuchtungsatrahlung der Scheinwerfer transparenten Zielmarken, deren Brechungsindex für diese Strahlung größer als √2 und kleiner als 2 ist. Kugeln dieser Art haben die optische Eigenschaft, daß der größte Teil der einfallenden Strahlung durch optische Brechung in das Kugelmaterial eintritt und nach Durchlaufen der Kugel ein bestimmter Anteil der Strahlung an der Kugelrückfläche, d.h. an der Grenzfläche von Kugelmaterial und Außenmedium (i.a. Luft), reflektiert wird. Der größte Teil dieser reflektierten Strahlung tritt nach einem weiteren Durchlaufen der Kugel mit Brechung aus der Kugel aus.

Betrachtet man ein auf die Kugel parallel einfallendes Strahlenbündel, so werden die einzelnen Strahlen dieses Bündels die Kugel nach der eben beschriebenen Weise durchlaufen und je nach ihrem Eintrittsort in die Kugel diese mit unterschiedlichen Austrittswinkeln und auch bei verschiedenen Austrittsorten verlassen. Die Erfindung nutzt nun die Erkenntnis aus, daß Strahlen innerhalb eines Bereichs von Austrittsorten, also innerhalb einer bestimmten Kugelzone die Kugel unter solchen Austrittswinkeln verlassen, daß sie von einem Abbildungssystem aufgenommen werden können. Als Abbildungssystem ist z.B. das Fernrohrobjektiv eines Theodoliten vorgesehenen. Die aus einer solchen Kugelzone in das Fernrohrobjektiv zurückreflektierte Strahlungsleistung fällt dabei nur mit der 3. Potenz der Distanz ab.

Eine Kugel mit dem Brechungsindex n = √2 stellt einen Grenzfall dar. Ein Randstrahl, der tangential auf die Kugeloberfläche auftrifft und mit Brechung in die Kugel eintritt, wird an der Kugelrückseite zum Teil reflektiert und tritt aufder gegenüberliegenden Seite der Kugel tangential aus, und zwar parallel mm eintretenden Strahl. Er wird von der Abbildungsoptik des Theodoliten erfaßt, ebenso achsnahe Strahlen, die nahe zur Achse von Theodolit und Kugelmittelpunkt verlaufen, Alle anderen einfallenden Strahlen werden derart divergent reflektiert, daß sie nicht in das Fernrohrobjektiv gelangen können.

Bei einem nur geringfügig größeren Brechungsindex als √2 gibt es bereits eine entsprechende Kugelzone, von der die Strahlen in das Fernrohrobjektiv gelangen und wodurch das detektierte Signal nur noch mit der dritten Potenz der Distanz abfällt. Die Breite und der Durchmesser der Kugelzone sind je nach Brechungsindex der Kugel verschieden. Mit zunehmendem Brechungsindex verringert sich der Durchmesser dieser Kugelzone, der im Fall n = √2 identisch mit dem Kugeldurchmesser ist, bis er im anderen Grenzfall, bei einem Brechungsindex von n = 2, zu Null wird. Außerhalb des genannten Brechungsindexbereichs gibt es diese Kugelzone nicht.

Wie außerordentlich wirkungsvoll die Erhöhung der Empfangsleistung bei Verwendung einer solchen transparenten Kugel ist, zeigt folgendes Beispiel, wobei ein Videotheodolit mit einer Fernrohröffnung von 42mm Durchmesser verwendet wurde:

Mit einer handelsüblichen Kugel aus Glas mit einem Brechungsindex von n = 1,83 und mit einem Durchmesser von 2mm empfängt man bei einer Distanz von 10m eine um den Faktor 50 höhere Strahlungsleistung als mit einer verchromten Stahlkugel mit einem Durchmesser von 10mm.

Bei einer Distanz von 20 Metern beträgt der Verbesserungsfaktor bereits 100, obwohl der Reflexionskoeffizient nach Durchgang durch die transparente Kugel nur ca. 8% beträgt im Vergleich zu ca. 60% der verchromten Stahlkugel.

Die um solche Faktoren erhöhte Intensität der reflektierten Strahlung macht jetzt eine Objektvermessung in entsprechend größerer Entfernung zum Theodolit möglich.

Der zweite Vorteil der Erfindung ergibt sich daraus, daß die Kugelzone, aus der die vom Theodolitfernrohr empfangene Strahlung austritt, die Form eines Ringes hat. Diese ringförmige Austrittszone liegt koaxial zur Achse von Kugelmittelpunkt und Mitte der Austrittspupille der Scheinwerferbeleuchtung und wird durch Fokussierung des Theodolitfernrohrs scharf gezeichnet in der Bildebene, also am Ort der Detektionseinrichtung, abgebildet. Somit beleuchtet bei Verwendung einer Videokamera das Zielmarkenbild immer viele Pixel des CCD-Arrays, gerade auch bei fokussierter Fernrohreinstellung, im Gegensatz zum Zielmarkenbild einer Stahlkugel. Zudem ermöglicht nun die ringförmige Strahlungsverteilung vorteilhafterweise die Anwendung von Kreisfitalgorithmen, mit denen der Kugelmittelpunkt der Zielmarke und damit durch Kombination mit einer Entfernungsmessung deren Position im 3-dimensionalen Raum hochpräzise bestimmt werden kann. Die Präzision einer solchen Auswertung ist weitaus höher als die Ermittlung des Mittelpunktes eines unscharfen Lichtflecks durch Schwerpunktbestimmung oder Konturauswertung, wie eingangs bei den herkömmlichen Verfahren bereits beschrieben.

Erfolgt die Einspiegelung der Beleuchtungsstrahlung über einen kleinen Spiegel auf der optischen Achse innerhalb des Thodoliten, so treten bei defokussiertem Theodolitfernrohr zwei koaxiale, ringförmig strahlende Bereiche auf die dadurch hervorgerufen werden, daß das Empfangsobjektiv in seinem zentralen Bereich durch den kleinen Spiegel abgeschattet ist. Auch diese ringförmigen Zonen können mit mathematischen Mitteln zur Bestimmung des Zielmarkenmittelpunkts ausgewertet werden, wobei sich durch Mittelwertbildung die Genauigkeit der Mittelpunktsbestimung noch steigern läßt.

Die ringförmige Strahlungsverteilung und die dadurch ermöglichte Anwendung von Kreisfitalgorithmen bietet einen weiteren großen Vorteil. Es hat sich bei vielen Untersuchungen herausgestellt, daß die Lage des Kugelmittelpunkts einer Zielmarke mit gleichbleibend hoher Präzison bestimmt werden kann, auch bei beschmutzter Kugeloberfläche oder bei Vignettierungen, die durch die Kugelfassung bedingt sind. Dieser Effekt ergibt sich aus der vielfach redundanten Information der Kreisringfläche, so daß lokale Unterbrechungen oder Ausfransungen des Kreisringes ausgemittelt oder von der Auswertung ausgenommen werden können. Dagegen besteht bei Verwendung von Metallkugeln mit defokussierten Reflexen immer die Gefahr, daß aufgrund verschmutzter Oberflächen Meßfehler auftreten, die sich nicht eliminieren lassen.

In aller Regel werden oberflächenpolierte Kugeln verwendet, denn andernfalls würde das Streulicht, das auf einer rauhen Oberfläche entsteht, die nutzbare Strahlungsintensität vermindern. Ebenso können reflexionserhöhende Beschichtungen die von der Kugel reflektierte Strahlungsintensität erhöhen. Die Beschichtung kann über die gesamte Kugeloberfläche erfolgen, da die Reflexionsanteile der Strahlung beim Übergang in Medien mit unterschiedlichen Brechungsindices hier nur im Prozentbereich liegen. Deshalb wird die von der Kugel in das Theodolitfernrohr reflektierte Strahlungsintensität hauptsächlich durch die Reflexion an der 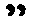 Rückseite" der Kugel bestimmt.

In diesem Bereich kann die Reflexion durch Verspiegelung einer kleinen Fläche stark erhöht werden. Dieser Vorteil wird allerdings dadurch erkauft, daß die Kugel durch die partielle Verspiegelung eine Vorzugsrichtung hat und nicht ohne Orientierung einfach auf eine Halterung gelegt werden kann. Insbesondere bei der Anwendung der Triangulationsmethode, bei der zwei oder mehr Theodolite zur Richtungsmessung auf die Kugel als Zielmarke verwendet werden, wird der nutzbare Winkelbereich für die Theodolite durch die Größe der Verspiegelungsfläche eingeschränkt. Ohne Verspiegelung ist die Kugel von allen Seiten anzielbar.

Eine Erhöhung der von der Kugel reflektierten Strahlungsintensität kann auch durch unterschiedliche Materialien innerhalb der Kugel erreicht werden. Bei Verwendung von Materialien mit unterschiedlichen, stufenweise oder kontinuierlich verlaufenden Brechungsindices breiten sich die Strahlen innerhalb der Kugel nicht mehr geradlinig sondern auf gekrümmten Bahnen aus. Dadurch werden die Austrittswinkel der Strahlen beeinflußt, so daß bei geeignetem Brechungsindexverlauf ein erhöhter Anteil der Strahlung vom Theodolit empfangen werden kann.

Im folgenden werden zwei Ausführungsbeispiele der Erfindung anhand der Zeichnung näher erläutert. Es zeigt
- Fig.1: eine schematische Darstellung des Erfindungsgegenstandes mit externer Zielmarkenbeleuchtung,
- Fig.2: eine schematische Darstellung des Erfindungsgegenstandes mit einer im Theodoliten integrierten Zielmarkenbeleuchtung,
- Fig.3: eine schematische Darstellung des Strahlenverlaufs durch eine transparente Kugel,
- Fig.4: ein Kamerabild der transparenten Kugel, die durch den koaxial angeordneten Scheinwerfer des Videotheodoliten beleuchtet wird.

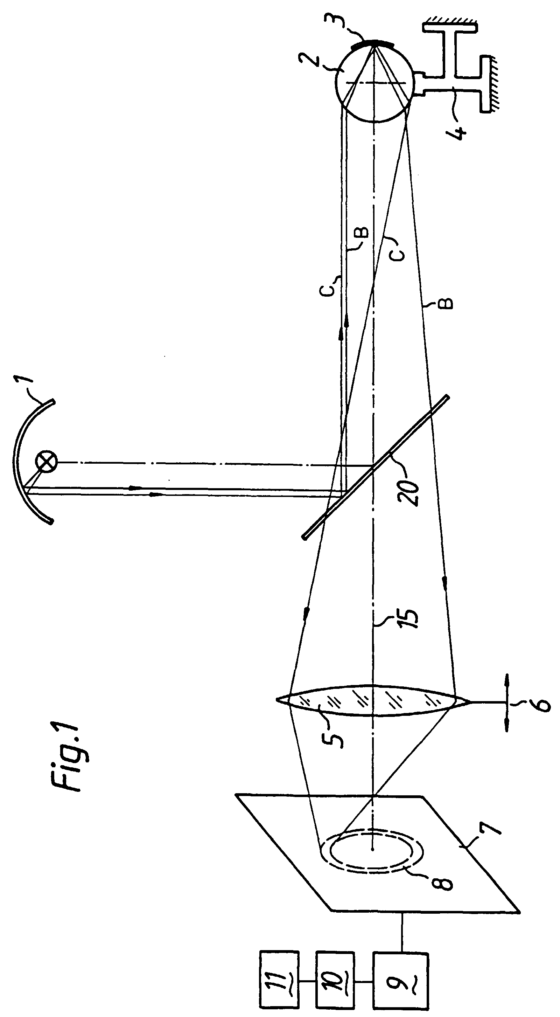

In Fig.1 ist eine optische Anordnung schematisch dargestellt mit einem Scheinwerfer 1, der über einen Teilerspiegel 20 eine kugelförmige Zielmarke 2 koaxial zur optischen Achse 15 beleuchtet, einer stabförmige Halterung 4 als Auflage für die Zielmarke 2, einem Abbildungssystem 5 mit einer Fokuseinrichtung 6, einer ortsauflösenden Detektoreinrichtung 7, einer Auswerteeinrichtung 9, einem Bildverarbeitungsrechner 10 und einer Entfernungsmesseinrichtung 11. Die in Fig. 1 gezeigten Größenverhältnisse sind nicht maßstabsgetreu.

Der optische Strahlengang ist für zwei ausgewählte, zueinander parallele Strahlen B und C schematisch dargestellt. Hierbei sind nur die für die Erfindung entscheidenden Strahlverläufe eingezeichnet, die nach Eintritt in die Kugel 2 und Reflexion an deren Rückfläche so aus der Kugel 2 austreten, daß sie vom Abbildungssystem 5 aufgenommen werden. Das Material der Kugel 2 ist für die Beleuchtungastrahlung des Scheinwerfers 1 transparent, wobei der Wert des Brechungsindex zwischen √2 und 2 beträgt. Unter dieser Bedingung begrenzen die beiden Strahlen B und C ein Strahlenbündel, das von der Apertur der Abbildungseinrichtung 5 aufgenommen und von dieser auf die ortsempfindliche Detektoreinrichtung 7 abgebildet werden kann. Die Kreisringfläche 8 auf der Detektoreinrichtung 7 entsteht durch die Gesamtheit aller Strahlenbündel, die zu dem exemplarisch dargestellten Strahlenbündel B-C rotationssymmetrisch zur optischen Achse 15 sind.

Zur Erhöhung der Reflexion im rückwärtigen Teil der kugelförmigen Zielmarke 2 kann eine partielle Verspiegelung 3 dienen. Die Zielmarke 2 kann dann natürlich nicht mehr in beliebiger Drehung auf die Halterung 4 gelegt werden, sondern muß mit der verspiegelten Fläche 3 ausgerichtet werden, wie Fig.1 zeigt.

Die Funktion des Teilerspiegels 20 wird nachfolgend erläutert. Generell haben Teilerspiegel die Eigenschaft, einen bestimmten Teil des einfallenden Lichts zu reflektieren und den übrigen anderen Teil zu transmittieren. Eingezeichnet sind in Fig.1 nur die vom Scheinwerfer 1 kommenden und am Teilerspiegel 20 reflektierten Strahlen sowie die von der Zielmarke 2 kommenden und durch den Teilerspiegel 20 transmittierten Strahlen. Die dazu komplementären, hier nicht eingezeichneten Strahlenanteile gehen verloren und tragen nicht zur Abbildung der Zielmarke bei. Die Einspiegelung der Beleuchtungsstrahlung über den Teilerspiegel 20 bedeutet also immer einen gewissen Lichtverlust. Andererseits kann damit aber ein Theodolit, der keine integrierte Beleuchtung besitzt, in einfacher Weise mit einer Beleuchtung nachgerüstet werden. Es muß nur der Teilerspiegel 20 vor das Objektiv des Theodolitfernrohres gebracht und die Zielmarke mit dem Scheinwerfer 1 koaxial beleuchtet werden, um damit eine Abbildung der reflektierten Kugelzone der Zielmarke erfindungsgemäß zu bewirken und zu nutzen.

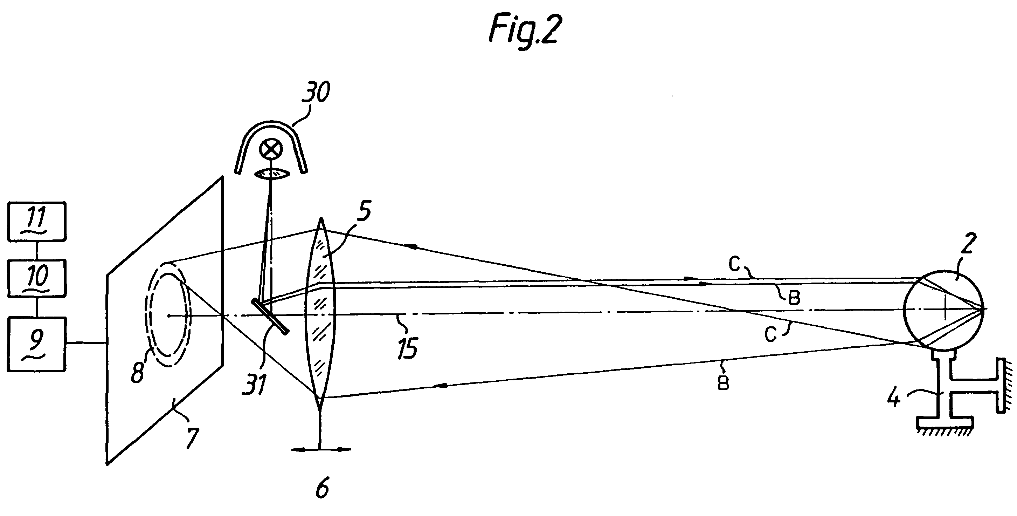

Fig.2 zeigt schematisch eine optische Einrichtung wie Fig.1, jedoch mit einer im Abbildungssystem 5 integrierten Zielmarkenbeleuchtung. Ein Scheinwerfer 30 beleuchtet die Zielmarke 2 über einen Spiegel 31, der auf der optischen Achse 15 des Abbildungssystems 5 angeordnet ist. Die Beleuchtung erfolgt ebenfalls koaxial zur optischen Achse 15. Der Spiegel 31 schattet einen kleinen zentralen Bereich des Abbildungsstrahlenganges ab, wodurch für die Abbildung etwas Licht verloren geht. Diese Anordnung entspricht dem eingangs erwähnten Theodolitsystem.

Die Zielmarke 2 besitzt hier keine partielle Verspiegelung, so daß sie uneingeschränkt von allen Seiten beleuchtet werden kann und die reflektierten Strahlen immer die Kreisringfläche 8 auf dem ortsempfindlichen Detektor 7 liefern. Die Darbietung dieses Zielmarkenbildes unabhängig von der Beleuchtungsrichtung eines Theodoliten ist besonders für die Anwendung der Triangulationsmethode geeignet, mit der von mehreren Theodoliten aus die Winkel zu der Zielmarke 2 bestimmt werden.

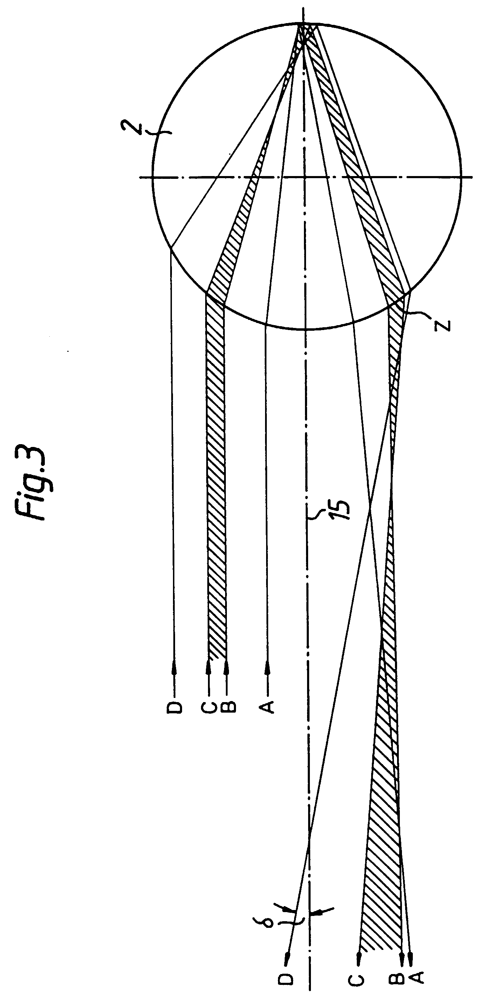

Fig.3 zeigt schematisch einige Strahlenverläufe in einer Schnittebene durch den Kugelmittelpunkt der transparenten Zielmarke 2 mit einem Brechungsindex zwischen √2 und 2. Der Übersichtlichkeit wegen sind nur die oberhalb der Achse 15 parallel einfallenden Strahlen A, B, C und D eingezeichnet. Je nach Abstand zur Achse 15 treten die Strahlen nach Durchlaufen der Kugel letztlich mit unterschiedlichen Winkeln aus der Kugel wieder aus. Die Strahlen A und D werden dabei unter solchen Austrittswinkeln rückreflektiert, daß sie an der optischen Abbildungseinrichtung 5 (Fig.2) vorbeiführen. Nur diejenigen Strahlen innerhalb des schraffierten und durch die Strahlen B und C begrenzten Bereichs gelangen über die Abbildungseinrichtung 5 auf den ortsauflösenden Detektor 7.

Als Austrittswinkel soll der Winkel zwischen rückreflektiertem Strahl und der Achse 15 verstanden werden. Beispielsweise ist für den Strahl D dessen Austrittswinkel δ eingezeichnet.

Durch Rotation um die Achse 15 ergeben sich die räumlichen, 3-dimensionalen Strahlenverläufe. Auf der Kugeloberfläche bildet sich dadurch diejenige ringförmige Strahlungszone Z, die der Detektor 7 als Kreisringfläche 8 empfängt.

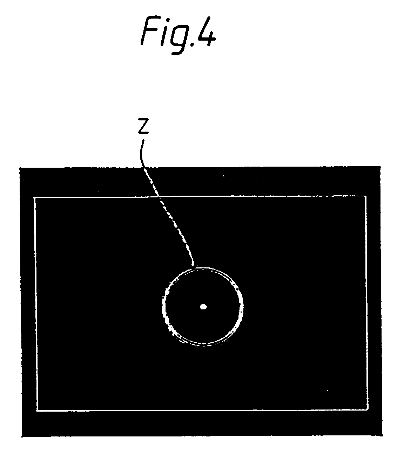

Fig.4 ist eine Kameraaufnahme der reflektierenden transparenten Kugel mit dem eingangs erwähnten Theodolitsystem. Das Bild zeigt die ringförmig strahlende Zone Z der Kugel. Sie wird für die mathematische Auswertung zur Bestimmung des Mittelpunkts der Zielmarke genutzt. Im Zentrum sieht man auch den Reflex der achsnahen Strahlung.

## Patentansprüche

1. Optische Einrichtung zum Bestimmen der Lage einer reflektierenden Zielmarke (2), mit einem Scheinwerfer (1;30) zur Beleuchtung der Zielmarke (2), einem Abbildungssystem (5) mm Abbilden der Zielmarke (2) aufeine ortsauflösende Detektoreinrichtung (7) und einer Auswerteeinrichtung (9) zur Bestimmung der Ortskoordinaten des Zielmarkenbildes (8), **dadurch gekennzeichnet**, daß als Zielmarke (2) eine für die Scheinwerferbeleuchtung transparente Kugel (2) mit einem Brechungsindex n zwischen √2 und 2 vorgesehen ist und das Zielmarkenbild (8) aufder Detektoreinrichtung (7) zumindest Teil einer Kreisringfläche ist, deren durch Bildauswertung bestimmter Mittelpunkt die Lage der Zielmarke (2) angibt.

2. Optische Einrichtung nach Anspruch 1, **dadurch gekennzeichnet**, daß zum allseitigen Anvisieren der Kugel (2) eine stabförmige Halterung (4) als Kugelauflage vorgesehen ist.

3. Optische Einrichtung nach Anspruch 1 oder 2, **dadurch gekennzeichnet**, daß die Kugel (2) aus Glas mit einem Brechungsindex n von 1,83 besteht.

4. Optische Einrichtung nach einem der vorherigen Ansprüche, **dadurch gekennzeichnet**, daß die Kugel (2) oberflächenpoliert ist.

5. Optische Einrichtung nach einem der vorherigen Ansprüche, **dadurch gekennzeichnet**, daß die Kugel (2) eine reflexionserhöhende Beschichtung aufweist.

6. Optische Einrichtung nach Anspruch 1, 2, 4 oder 5, **dadurch gekennzeichnet**, daß die Kugel (2) Materialien mit verschiedenen Brechungsindices aufweist.

7. Optische Einrichtung nach einem der vorherigen Ansprüche, **dadurch gekennzeichnet**, daß die Kugel (2) partiell verspiegelt ist.

8. Optische Einrichtung nach einem der vorherigen Ansprüche, **dadurch gekennzeichnet**, daß der Beleuchtungsstrahlengang zur Zielmarke (2) axialsymmetrisch zur optischen Achse (15) des Abbildungssystems (5) verläuft.

9. Optische Einrichtung nach einem der vorherigen Ansprüche, **dadurch gekennzeichnet**, daß das Abbildungssystem (5) eine Fokussiereinrichtung (6) aufweist.

10. Optische Einrichtung nach einem der vorherigen Ansprüche, **dadurch gekennzeichnet**, daß das Abbildungssystem (5) ein Theodolitfernrohr ist.

11. Optische Einrichtung nach einem der vorherigen Ansprüche, **dadurch gekennzeichnet**, daß die Detektoreinrichtung (7) ein CCD-Array oder eine Videokamera ist.

12. Optische Einrichtung nach einem der vorherigen Ansprüche, **dadurch gekennzeichnet**, daß die Auswerteeinrichtung (9) einen Bildverarbeitungsrechner (10) enthält.

13. Optische Einrichtung nach einem der vorherigen Ansprüche, **dadurch gekennzeichnet**, daß Scheinwerfer (1;30), Abbildungssystem (5), Detektoreinrichtung (7) und Auswerteeinrichtung (9) zu einem kompakt aufgebautem Gerät ausgebildet sind.

14. Optische Einrichtung nach einem der vorhergehenden Ansprüche, **dadurch gekennzeichnet**, daß zusätzlich eine Entfernungsmeßeinrichtung (11) vorgesehen ist.

15. Optische Einrichtung nach einem der vorherigen Ansprüche, **dadurch gekennzeichnet**, daß für die Bildauswertung zur Ermittlung des Kreismittelpunkts ein Kreisfitalgorithmus zur Besteinpassung eines Kreises in das Zielmarkenbild (8) vorgesehen ist.

16. Verfahren zur Bestimmung der Lage einer reflektierenden Zielmarke (2), mit einem Scheinwerfer (1;30) und einem auf der optischen Achse (15) angeordneten Spiegel (31) zur Beleuchtung der Zielmarke (2), einem fokussierbaren Abbildungssystem (5) zum Abbilden der Zielmarke (2) auf eine ortsauflösende Detektoreinrichtung (7) und einer Auswerteeinrichtung (9) zur Bestimmung der Ortskoordinaten des Zielmarkenbildes (8), **dadurch gekennzeichnet**, daß als Zielmarke (2) eine für die Scheinwerferbeleuchtung transparente Kugel (2) mit einem Brechungsindex n zwischen √2 und 2 verwendet wird und daß das optische Abbildungssystem (5) defokussiert wird, was zusammen mit der Abschattungswirkung des Spiegels (31) zu Mehrfachkreisringflächen führt, die aus konzentrischen, sich nicht überdeckenden Kreisringflächen unterschiedlichen Durchmessers bestehen und die von der Detektoreinrichtung (7) aufgenommen und mit mathematischen Mitteln zur Bestimmung des Zielmarkenmittelpunkts ausgewertet werden.

## Claims

1. Optical device for determining the location of a reflective target (2), having a spotlight (1; 30) for illuminating the target (2), an imaging system (5) for imaging the target (2) onto a position-resolving detector device (7) and an evaluation device (9) for determining the position coordinates of the target image (8), characterized in that provision is made as target (2) of a sphere (2) which is transparent to the spotlight illumination and has a refractive index n between √2 and 2, and the target image (8) on the detector device (7) is at least part of a circular annular area, the centre of which, determined by image evaluation, indicates the location of the target (2).

2. Optical device according to claim 1, characterized in that, for the purpose of sighting the sphere (2) from all sides, a rod-shaped mount (4) is provided as sphere support.

3. Optical device according to claim 1 or 2, characterized in that the sphere (2) is composed of glass having a refractive index n of 1.83.

4. Optical device according to one of the preceding claims, characterized in that the sphere (2) is surface-polished.

5. Optical device according to one of the preceding claims, characterized in that the sphere (2) has a reflection-enhancing coating.

6. Optical device according to claim 1, 2, 4 or 5, characterized in that the sphere (2) has materials of different refractive indices.

7. Optical device according to one of the preceding claims, characterized in that the sphere (2) is partially silvered.

8. Optical device according to one of the preceding claims, characterized in that the illumination beam path to the target (2) runs axially symmetrically to the optical axis (15) of the imaging system (5).

9. Optical device according to one of the preceding claims, characterized in that the imaging system (5) has a focusing device (6).

10. Optical device according to one of the preceding claims, characterized in that the imaging system (5) is a theodolite telescope.

11. Optical device according to one of the preceding claims, characterized in that the detector device (7) is a CCD array or a video camera.

12. Optical device according to one of the preceding claims, characterized in that the evaluation device (9) contains an image-processing computer (10).

13. Optical device according to one of the preceding claims, characterized in that spotlight (1; 30), imaging system (5), detector device (7) and evaluation device (9) are designed to form an apparatus of compact structure.

14. Optical device according to one of the preceding claims, characterized in that a distance-measuring device (11) is also provided.

15. Optical device according to one of the preceding claims, characterized in that a circle-fitting algorithm for the best fitting of a circle into the target image (8) is provided for the image evaluation in order to determine the centre of the circle.

16. Method for determining the location of a reflective target (2), having a spotlight (1; 30) and a mirror (31) arranged on the optical axis (15) for illuminating the target (2), a focusing imaging system (5) for imaging the target (2) onto a position-resolving detector device (7) and an evaluation device (9) for determining the position coordinates of the target image (8), characterized in that the target (2) used is a sphere (2) which is transparent to the spotlight illumination and has a refractive index n between √2 and 2, and in that the optical imaging system (5) is defocused, which, together with the shadowing effect of the mirror (31), results in multiple circular annular areas which consist of concentric circular annular areas of differing diameter which do not overlap and which are picked up by the detector device (7) and evaluated using mathematical means to determine the centre of the target.

## Revendications

1. Dispositif optique pour déterminer la position d'un repère de visée réfléchissant (2), avec un projecteur (1; 30) pour l'éclairage du repère de visée (2), un système de visualisation (5) pour visualiser le repère de visée (2) sur un dispositif de détection de position (7) et un dispositif d'exploitation (9) pour la détermination des coordonnées locales de l'image du repère de visée (8), caractérisé en ce qu'il est prévu en guise de repère de visée (2) une bille (2) transparente à l'éclairage du projecteur, avec un indice de réfraction n compris entre √2 et 2 et l'image (8) du repère de visée sur le dispositif de détection (7) est au moins une partie d'une surface annulaire, dont le point central déterminé par exploitation de l'image indique la position du repère de visée (2).

2. Dispositif optique suivant la revendication 1, caractérisé en ce qu'il est prévu un support en forme de barre (4) en guise d'appui de la bille pour une bonne visibilité de la bille (2) de tous les côtés.

3. Dispositif optique suivant la revendication 1 ou 2, caractérisé en ce que la bille (2) est constituée de verre avec un indice de réfraction n de 1,83.

4. Dispositif optique suivant l'une quelconque des revendications précédentes, caractérisé en ce que la bille (2) a une surface polie.

5. Dispositif optique suivant l'une quelconque des revendications précédentes, caractérisé en ce que la bille (2) présente un revêtement accentuant la réflexion.

6. Dispositif optique suivant la revendication 1, 2, 4 ou 5, caractérisé en ce que la bille (2) présente des matières avec différents indices de réfraction.

7. Dispositif optique suivant l'une quelconque des revendications précédentes, caractérisé en ce que la bille (2) est en partie métallisée.

8. Dispositif optique suivant l'une quelconque des revendications précédentes, caractérisé en ce que le faisceau d'éclairage circulant vers le repère de visée (2) présente une symétrie axiale par rapport à l'axe optique (15) du dispositif de visualisation (5).

9. Dispositif optique suivant l'une quelconque des revendications précédentes, caractérisé en ce que le système de visualisation (5) présente un dispositif de focalisation (6).

10. Dispositif optique suivant l'une quelconque des revendications précédentes, caractérisé en ce que le système de visualisation (5) est une lunette de théodolite.

11. Dispositif optique suivant l'une quelconque des revendications précédentes, caractérisé en ce que le dispositif de détection (7) est un réseau de CCD ou une camera vidéo.

12. Dispositif optique suivant l'une quelconque des revendications précédentes, caractérisé en ce que le dispositif d'exploitation (9) comprend un calculateur de traitement d'image (10).

13. Dispositif optique suivant l'une quelconque des revendications précédentes, caractérisé en ce que le projecteur (1; 30), le système de visualisation (5), le dispositif de détection (7) et le dispositif d'exploitation (9) sont configurés en un appareil de construction compacte.

14. Dispositif optique suivant l'une quelconque des revendications précédentes, caractérisé en ce qu'il est en outre prévu un dispositif de mesure de distance (11).

15. Dispositif optique suivant l'une quelconque des revendications précédentes, caractérisé en ce qu'il est prévu, pour l'exploitation de l'image en vue de la détermination du point central du cercle, un algorithme d'adaptation circulaire pour la meilleure inscription d'un cercle dans l'image du repère de visée (8).

16. Procédé pour la détermination de la position d'un repère de visée réfléchissant (2), avec un projecteur (1; 30) et un miroir (31) disposé sur l'axe optique (15) pour l'éclairage du repère de visée (2), un système de visualisation focalisable (5) pour visualiser le repère de visée (2) sur un dispositif de détection de position (7) et un dispositif d'exploitation (9) pour la détermination des coordonnées locales de l'image du repère de visée (8), caractérisé en ce que l'on utilise en guise de repère de visée (2) une bille (2) transparente à l'éclairage du projecteur, avec un indice de réfraction n compris entre √2 et 2 et en ce que le système de visualisation optique (5) est défocalisé, ce qui, conjointement à l'action d'ombrage du miroir (31), conduit à des surfaces annulaires multiples, qui se composent de surfaces annulaires concentriques non chevauchantes de différents diamètres et qui sont captées par le dispositif de détection (7) et exploitées avec des moyens mathématiques pour la détermination du point central du repère de visée.
